# FASCICULE DE BREVET EUROPEEN

(11) **EP 0 860 117 B1**
(45) Date de publication et mention de la délivrance du brevet: **03.09.2003**
(21) Numéro de dépôt: 98490008.4
(22) Date de dépôt: 13.02.1998
(51) Int. Cl.: A01N 47/44, C11D 1/62, A61L 2/18

(54) **Composition détergente et/ou désinfectante**
Reinigungs- und/oder Desinfektionsmittel
Cleaning and/or disinfecting composition

(30) Priorité: 13.02.1997 FR 9701906
(43) Date de publication de la demande: 26.08.1998
(73) Titulaire: LABORATOIRES ANIOS, Société Anonyme, 59260 Lille-Hellemmes (Nord) (FR)
(72) Inventeur: Letartre, Bertrand, 59260 Lille-Hellemmes (FR)
(74) Mandataire: Duthoit, Michel

(56) Documents cités:
- EP-A- 0 041 448
- EP-A- 0 127 131
- EP-A- 0 213 601
- EP-A- 0 252 310
- EP-A- 0 361 301
- EP-A- 0 478 445
- EP-A- 0 774 504
- WO-A-91/13965
- WO-A-94/00548
- FR-A- 2 701 037
- US-A- 3 017 278
- US-A- 4 308 229

## Description

La présente invention concerne une composition détergente et/ou désinfectante, destinée au traitement d'instruments médicaux et/ou chirurgicaux en acier inox.

Actuellement, pour désinfecter et/ou nettoyer par détergence, on connaît différentes compositions comprenant un ou des halogénures d'ammonium quaternaire, tel que, par exemple, des chlorures et/ou des bromures.

En effet, de tels composants présentent l'avantage, notamment, d'offrir seul ou en association, un spectre d'activité relativement large et un pouvoir désinfectant satisfaisant.

Toutefois, leur emploi sur des objets métalliques et/ou dans des environnements impliquant la présence de métaux peut être la source de nombreux problèmes car ils sont corrosifs.

On connaît ainsi une composition utilisée pour la désinfection d'instruments décrite dans le document EP A 252 310 comprenant, notamment, du diacétate de cocopropylène diamine-guanidium et du propionate de didécylméthylpoly (oxyéthyl) ammonium.

On connaît également, des documents EP A 127 131 et EP A 213 601, des compositions pour la désinfection comportant des sels organiques quaternaires. Toutes ces compositions connues utilisent en outre des halogénures pour agir de manière adéquate et ne sont donc pas adaptées au traitement d'instruments en inox à cause de leur action corrosive.

Le but de la présente invention est de proposer une composition détergente et/ou désinfectante qui pallie les inconvénients précités et permet de maîtriser les phénomènes de corrosion rencontrés avec les compositions précédemment connues.

Un avantage de la présente invention est de pouvoir être utilisé sur des objets métalliques et/ou dans des environnements impliquant la présence de métaux, et ceci même de manière fréquente.

D'autres buts et avantages de la présente invention apparaîtront au cours de la description qui va suivre qui n'est donnée qu'à titre indicatif et qui n'a pas pour but de la limiter.

La présente invention concerne une composition détergente et/ou désinfectante, destinée au traitement d'instruments médicaux et/ou chirurgicaux en acier inox comprenant au moins un ou des sels organiques d'ammonium quaternaire.

L'invention sera mieux comprise à la lecture de la description suivante qui en développe certains modes de réalisation.

L'invention conceme une composition détergente et/ou désinfectante destinée au traitement d'instruments médicaux et/ou chirurgicaux en acier inox.

Il s'agit en particulier d'instruments en acier de type martensitique tel que Z30 C13, Z40 C13 et/ou Z20 C12.

Selon l'invention, ladite composition comprend au moins un ou des sels organiques d'ammonium quaternaire.

Grâce à un tel choix, l'invention présente ainsi l'avantage de permettre de maîtriser les phénomènes de corrosion, et ceci aussi bien en milieu acide, neutre ou alcalin.

En effet, il a été constaté que l'utilisation de sels organiques d'ammonium quaternaire déplaçait de façon significative les valeurs des potentiels de piqûre et des potentiels de repassivation vers des valeurs supérieures, montrant ainsi la plus faible corrosivité de ces composés selon des méthodes électro-chimiques.

On obserse ainsi une diminution voire une disparition des effets de la corrosion non seulement à la surface de l'instrument mais encore à coeur.

La composition conforme à l'invention peut en conséquence être avantageusement utilisée pour empêcher l'apparition de piqûre par corrosion sur les matériels traités et diminuer ainsi les risques d'accumulation microbienne.

Conformément à l'invention, les sels organiques d'ammonium quaternaire utilisés sont, notamment, des lactates et/ou des propionates d'ammonium quaternaire.

De manière générale, lesdits sels d'ammonium quaternaire contiennent des radicaux linéaires, ramifiés et/ou cycliques. Il s'agit, par exemple, de didécyl méthyl polyoxyéthylammonium.

La composition conforme à l'invention pourra éventuellement comprendre, en outre, des agents aptes au moins à renforcer l'activité désinfectante.

Lesdits agents pourront être constitués, notamment, de biguanide (chlorhexidine ou PHMB), d'aldéhydes, d'amphotère, d'alcool, de phénoxyalcool, de guanidium acétate, en milieu aqueux et/ou hydro-organique, et/ou autres.

La composition conforme à l'invention pourra aussi comprendre, en outre, par exemple des agents tensio-actifs, des agents chélatants et/ou séquestrants, des agents régulateurs de pH, tels que alcalinisants ou acidifiants, et/ou autres.

Lesdits agents séquestrants sont constitués, notamment, par de l'EDTA. Quant aux agents alcalinisants, il pourra s'agir, notamment, d'hydroxyde de sodium ou de potassium et/ou de carbonate.

La concentration des agents tensio-actifs est comprise, par exemple, entre 0,1 % et 15 %, en poids. Quant aux agents séquestrants, ils pourront être utilisés, toujours en concentration en poids, notamment de 0,01 % à 20 %.

La composition conforme à l'invention pourra se présenter, par exemple, sous la forme d'un concentré à diluer, aqueux ou en poudre, ou d'un produit prêt à l'emploi.

On donne dans la suite deux exemples non limitatifs, de formulation neutre ou alcaline de compositions désinfectantes détergentes conformes à l'invention, les proportions étant données en poids.

### 1er EXEMPLE

- Propionate de didécyl méthyl polyoxyéthylammonium 5 à 20 %
- Biguanide 1 à 10 %
- Tensio-actif non ionique 1 à 20 %
- EDTA 5 à 30 %
- Oxyde d'amine 1 à 10 %
- Excipients qsp 100 %

### 2 ème EXEMPLE

- Propionate de didécyl méthyl polyoxyéthylammonium 5 à 20 %
- Guanidium acétate 1 à 10 %
- Hydroxyde de sodium 1 à 20 %
- Tensio-actif non ionique 1 à 20 %
- EDTA 1 à 30 %
- Excipients qsp 100 %

Lesdits excipients sont constitués, par exemple, de colorants, de parfum, d'eau et/ou autres.

Naturellement, d'autres modes de réalisation, à la portée de l'homme de l'art, auraient pu être envisagés sans pour autant sortir du cadre de la présente invention.

## Revendications

1. Composition pour désinfecter et/ou nettoyer les instruments médicaux et/ou chirurgicaux en acier inox comprenant en poids:
- Propionate de didécyl méthyl polyoxyéthylammonium 5 à 20 %
- Guanidium acétate 1 à 10 %
- Hydroxyde de sodium 1 à 20 %
- Tensio-actif non ionique 1 à 20 %
- EDTA 1 à 30 %
- Excipients qsp 100 %

## Patentansprüche

1. Zusammensetzung zum Entseuchen und/oder zum Reinigen der ärtzlichen und/oder chirurgischen Instrumente aus Edelstahl, umfassend in Gewichtsprozent :
| | |
|---|---|
| Didecylmethylpolyoxyethylammoniumpropionat | 5 bis 20 % |
| Guanidiumazetat | 1 bis 10 % |
| Natriumhydroxid | 1 bis 20 % |
| Nichtionisches Oberflächenaktives Mittel | 1 bis 20 % |
| EDTA | 1 bis 30 % |
| Exzipienten | Rest, bis zu 100 % |

## Claims

1. A compound for disinfecting and/or cleaning stainless steel medical and/or surgical instruments comprising in weight:
- didecyl methyl polyoxyethylammonium propionate 5 to 20 %
- guanidium acetate 1 to 10 %
- sodium hydroxide 1 to 20 %
- non-ionic surfactant 1 to 20 %
- EDTA 1 to 30 %
- Excipients qsp 100 %
